# EUROPEAN PATENT APPLICATION

(11) **EP 4 790 445 A1**
(43) Date of publication of application: **12.08.2026**
(21) Application number: 26154159.3
(22) Date of filing: 26.01.2026
(51) Int. Cl.: G01S 1/04, G01S 3/30, H04B 7/06, G01S 5/00

(54) **LOCATION DETERMINATION BASED ON A PLURALITY OF DIRECTIONAL BEAMS**

(30) Priority: 10.02.2025 US 202563756649 P; 22.01.2026 US 202619456905
(71) Applicant: Juniper Networks, Inc., Sunnyvale, CA 94089-1206 (US)
(72) Inventor: ROSENTHAL, Joshua, Sunnyvale, 94089 (US); FRIEDMANN, James, Sunnyvale, 94089 (US); MUSANTE, John James, Sunnyvale, 94089 (US); SINGH, Gurpreet, Sunnyvale, 94089 (US)
(74) Representative: D Young & Co LLP

(57) **Abstract**

In general, techniques are described for determining a location of a wireless device in a site based on a plurality of directional beams transmitted with a plurality of offset angles. For example, a network device comprises a plurality of directional antennas configured to transmit a plurality of directional beams, wherein each directional beam of the plurality of directional beams offset by one of a plurality of offset angles, wherein at least one directional beam of the plurality of directional beams is formed by one or more signals with a phase shift. The processing circuitry of the network device is configured to send, to a network management system, information associated with one or more directional beams of the plurality of directional beams that are received by a wireless device to determine a location of the wireless device in a site.

## Description

This application claims priority to U.S. Application No. 19/456,905, filed January 22, 2026, which claims the benefit of U.S. Provisional Application No. 63/756,649, filed February 10, 2025, the entire contents of which are incorporated herein by reference.

### TECHNICAL FIELD

The present application relates to wireless communications and, more particularly, to methods and/or apparatus for determining a location of a device in a site.

### BACKGROUND

Commercial sites or premises, such as offices, hospitals, airports, stadiums, or retail outlets, often include a network of wireless access points (APs) installed throughout the sites to provide wireless network services to one or more wireless client devices. APs enable client devices to wirelessly connect to a wired network using various wireless networking protocols and technologies, such as wireless local area networking protocols conforming to one or more of the IEEE 802.11 standards (i.e., "Wi-Fi"), Bluetooth / Bluetooth Low Energy (BLE), mesh networking protocols such as ZigBee or other wireless networking technologies. Many different types of wireless client devices, such as laptop computers, smartphones, tablets, wearable devices, appliances, and Internet of Things (IoT) devices, incorporate wireless communication technology and can be configured to connect to wireless access points when the device is in range of a compatible wireless access point in order to access a wired network.

Location services may be provided in conjunction with a wireless network, such as wayfinding, location-based proximity notifications, asset tracking, and location-based analytics that derive insights from client mobility through a site. Estimation of the location of a wireless device is essential in many fields, such as navigation and/or tracking of moving objects, identifying the location of wireless devices experiencing performance degradation, etc.

### SUMMARY

Particular aspects are set out in the appended independent claims. Various optional embodiments are set out in the dependent claims. In general, this disclosure describes techniques for determining a location of a wireless device in a site based on a plurality of directional beams transmitted with one or more offset angles. For example, a network device (e.g., an access point) may comprise an antenna array including a plurality of antennas configured to transmit a plurality of wireless signals (e.g., "beams" or "beacons") in specific directions, referred to as "directional beams." For example, the antenna array of the network device may transmit a first set of directional beams with a first offset angle and a second set of directional beams with a second offset angle that is offset from the first set of directional beams. A location engine may receive information indicating receipt by a wireless device (e.g., client device) of one or more directional beams transmitted by the network device, such as signal strength measurements (e.g., Received Signal Strength Indicator (RSSI) values) and identifying information of the client device (or identifying information of a sensor of the client device) that received the one or more directional beams. Based on the signal strength measurements, the location engine may determine a location of the client device in a site

The techniques of this disclosure provide one or more technical advantages and practical applications. For example, by configuring an antenna array to transmit a plurality of directional beams at a plurality of offset angles, the antenna array may transmit a greater number of directional beams for determining the location of wireless devices with greater accuracy without adding additional antennas to the antenna array that would increase the overall size of the network device, which may be impractical for use in certain sites, such as sites that have small areas or spaces.

In one example, the disclosure describes a network device comprising a plurality of directional antennas configured to transmit a plurality of directional beams, wherein each directional beam of the plurality of directional beams is offset by one of a plurality of offset angles, wherein at least one directional beam of the plurality of directional beams is formed by one or more signals with a phase shift. The network device further comprises processing circuitry configured to send, to a network management system, information associated with one or more directional beams of the plurality of directional beams that are received by a wireless device to determine a location of the wireless device in a site.

In another example, the disclosure describes a network management system comprising memory and processing circuitry coupled to the memory. The processing circuitry is configured to receive signal strength measurements associated with a plurality of directional beams received by a wireless device, wherein the plurality of directional beams comprises one or more directional beams of a first set of directional beams transmitted with a first offset angle and one or more directional beams of a second set of directional beams transmitted with a second offset angle that is offset from the first set of directional beams transmitted with the first offset angle. The processing circuitry is further configured to determine a location of the wireless device in a site based on the signal strength measurements. The processing circuitry also configured to perform an action based on the location of the wireless device.

In another example, the disclosure describes a user equipment device comprising memory and processing circuitry coupled to the memory, the processing circuitry configured to receive, from a network device, a plurality of directional beams, wherein the plurality of directional beams comprises a first directional beam of a first set of directional beams transmitted by the network device with a first offset angle and a second directional beam of a second set of directional beams transmitted by the network device with a second offset angle. The processing circuitry is further configured to send, to a network management system, a signal strength measurement for the first directional beam and a signal strength measurement for the second directional beam. The processing circuitry is also configured to receive, from the network management system and based on sending the signal strength measurement for the first directional beam and the signal strength measurement for the second directional beam, location information indicative of a location of the user equipment device in a site.

The details of one or more examples of the techniques of this disclosure are set forth in the accompanying drawings and the description below. Other features, objects, and advantages of the techniques will be apparent from the description and drawings, and from the claims.

### BRIEF DESCRIPTION OF THE DRAWINGS

FIG. 1 is a block diagram of an example network system configured to determine a location of a wireless device in a site based on a plurality of directional beams transmitted with a plurality of offset angles, in accordance with one or more techniques of the disclosure.
FIG. 2A is a block diagram of an example access point device configured to transmit a plurality of directional beams at a plurality of offset angles for determining a location of a wireless device in a site, in accordance with one or more techniques of the disclosure.
FIG. 2B is a block diagram of an example antenna array configured to transmit a plurality of directional beams at a plurality of offset angles for determining a location of a wireless device in a site, in accordance with one or more techniques of the disclosure.
FIGS. 2C-2D illustrate examples of instructions to configure an antenna array to transmit a plurality of directional beams at a plurality of offset angles for determining a location of a wireless device in a site, in accordance with one or more techniques of the disclosure.
FIG. 3 is a block diagram of an example network management system configured to determine a location of a wireless device in a site based on a plurality of directional beams transmitted with a plurality of offset angles, in accordance with one or more techniques of the disclosure.
FIG. 4 is a block diagram of an example user equipment device, in accordance with one or more techniques of the disclosure.
FIG. 5 is a flowchart of an example operation to determine a location of a wireless device in a site based on a plurality of directional beams transmitted with a plurality of offset angles, in accordance with one or more techniques of the disclosure.

### DETAILED DESCRIPTION

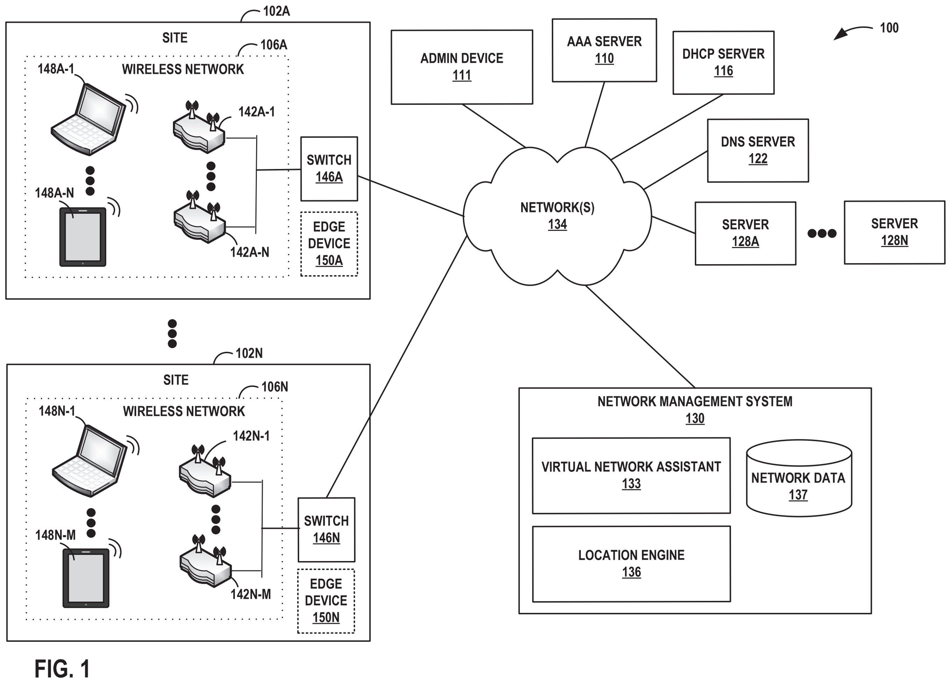

FIG. 1 is a block diagram of an example network system 100 configured to determine a location of a wireless device in a site based on a plurality of directional beams transmitted with a plurality of offset angles, in accordance with one or more techniques of this disclosure. Example network system 100 includes a plurality sites 102A-102N at which a network service provider manages one or more wireless networks 106A-106N, respectively. Although each of sites 102A-102N is shown in FIG. 1 as including a single wireless network 106A-106N, respectively, in some examples, each of sites 102A-102N may include multiple wireless networks, and the disclosure is not limited in this respect.

Each of sites 102A-102N includes a plurality of network devices, such as access points (APs) 142, switches 146, or routers (not shown) within the wired network edge. For example, site 102A includes a plurality of APs 142A-1 through 142A-N. Similarly, site 102N includes a plurality of APs 142N-1 through 142N-M. References to "N" or "M" may represent any number. References to "N" for different elements need not be the same number. Similarly, references to "M" for different elements need not be the same number.

Each of APs 142 may be any type of wireless access point, including, but not limited to, a commercial or enterprise AP, a router, or any other device that is connected to the wired network and is capable of providing wireless network access to client devices within the site. As further described below, an AP 142 may include an antenna array including a plurality of antennas configured to generate and transmit one or more wireless signals (e.g., "beams" or "beacons") in a given direction, referred to as "directional beams." As further described below, directional beams emitted by an AP 142 may be used, for example, to determine the location of a wireless device that receives one or more of the directional beams.

Each of sites 102A-102N also includes a plurality of client devices, otherwise known as user equipment devices (UEs), representing various wireless-enabled devices within each site. For example, a plurality of UEs 148A-1 through 148A-N are currently located at site 102A. Similarly, a plurality of UEs 148N-1 through 148N-M are currently located at site 102N. Each of UEs 148 may be any type of wireless client device, including, but not limited to, a mobile device such as a smart phone, tablet or laptop computer, a personal digital assistant (PDA), a wireless terminal, a smart watch, smart ring, or other wearable device. UEs 148 may also include wired client-side devices, e.g., IoT devices such as printers, security devices, environmental sensors, or any other device connected to the wired network and configured to communicate over one or more wireless networks 106.

In order to provide wireless network services to UEs 148 and/or communicate over the wireless networks 106, APs 142 and the other wired client-side devices at sites 102 are connected, either directly or indirectly, to one or more network devices (e.g., switches, routers, or the like) via physical cables, e.g., Ethernet cables. In the example of FIG. 1, site 102A includes a switch 146A to which each of APs 142A-1 through 142A-N at site 102A are connected. Similarly, site 102N includes a switch 146N to which each of APs 142N-1 through 142N-M at site 102N are connected. Although illustrated in FIG. 1 as if each site 102 includes a single switch 146 and all APs 142 of the given site 102 are connected to the single switch 146, in other examples, each site 102 may include more or fewer switches and/or routers. In addition, the APs and the other wired client-side devices of the given site may be connected to two or more switches and/or routers. In addition, two or more switches at a site may be connected to each other and/or connected to two or more routers, e.g., via a mesh or partial mesh topology in a hub-and-spoke architecture. In some examples, interconnected switches and routers comprise wired local area networks (LANs) at sites 102 hosting wireless networks 106.

Example network system 100 also includes various networking components for providing networking services within the wired network including, as examples, an Authentication, Authorization and Accounting (AAA) server 110 for authenticating users and/or UEs 148, a Dynamic Host Configuration Protocol (DHCP) server 116 for dynamically assigning network addresses (e.g., IP addresses) to UEs 148 upon authentication, a Domain Name System (DNS) server 122 for resolving domain names into network addresses, a plurality of servers 128A-128N (collectively "servers 128") (e.g., web servers, databases servers, file servers, application servers, and the like), and a network management system (NMS) 130. As shown in FIG. 1, the various devices and systems of network 100 are coupled together via one or more network(s) 134, e.g., the Internet and/or an enterprise intranet.

In the example of FIG. 1, NMS 130 is a cloud-based computing platform that manages wireless networks 106A-106N at one or more of sites 102A-102N. As further described herein, NMS 130 provides an integrated suite of management tools and implements various techniques of this disclosure. In general, NMS 130 may provide a cloud-based platform for wireless network data acquisition, monitoring, activity logging, reporting, predictive analytics, location determination, network anomaly identification, and alert generation. In some examples, NMS 130 outputs location data of detected wireless devices (e.g., map and coordinates). In some examples, NMS 130 outputs notifications, such as alerts, alarms, graphical indicators on dashboards, log messages, text / short messaging service (SMS) messages, email messages, and the like, and/or recommendations regarding wireless network issues to a site or network administrator ("admin") interacting with and/or operating admin device 111. Additionally, in some examples, NMS 130 operates in response to configuration input received from the administrator interacting with and/or operating admin device 111. In some examples, NMS 130 may comprise one or more computing devices, dedicated servers, virtual machines, containers, services, or other forms of environments for performing the techniques described herein.

The admin device 111 may comprise a computing device of IT personnel and/or administrator associated with one or more of sites 102 and/or switches 146 at the wired network edge. Admin device 111 may be implemented as any suitable device for presenting output and/or accepting user input. For instance, admin device 111 may include a display. Admin device 111 may be a computing system, such as a mobile or non-mobile computing device operated by a user and/or by the administrator. Admin device 111 may, for example, represent a workstation, a smart phone, a laptop or notebook computer, a desktop computer, a tablet computer, or any other computing device that may be operated by a user and/or present a user interface in accordance with one or more aspects of the present disclosure. Admin device 111 may be physically separate from and/or in a different location than NMS 130 such that admin device 111 may communicate with NMS 130 via network 134 or other means of communication.

In some examples, one or more of the network devices, e.g., APs 142, switches 146, or routers, may connect to corresponding edge devices 150A-150N via physical cables, e.g., Ethernet cables. Edge devices 150 comprise cloud-managed, wireless local area network (LAN) controllers. Each of edge devices 150 may comprise an on-premises device at a site 102 that is in communication with NMS 130 to extend certain microservices from NMS 130 to the on-premises NAS devices while using NMS 130 and its distributed software architecture for scalable and resilient operations, management, troubleshooting, and analytics.

Each one of the network devices of network system 100, e.g., servers 110, 116, 122 and/or 128, APs 142, UEs 148, switches 146, and any other servers or devices attached to or forming part of network system 100, may include a system log or an error log module wherein each one of these network devices records the status of the network device including normal operational status and error conditions. Throughout this disclosure, one or more of the network devices of network system 100, e.g., servers 110, 116, 122 and/or 128, APs 142, UEs 148, and switches 146, may be considered "third-party" network devices when owned by and/or associated with a different entity than NMS 130 such that NMS 130 does not receive, collect, or otherwise have access to the recorded status and other data of the third-party network devices. In some examples, edge devices 150 may provide a proxy through which the recorded status and other data of the third-party network devices may be reported to NMS 130.

In some examples, NMS 130 monitors network data 137 received from wireless networks 106A-106N at each site 102A-102N, respectively, and manages network resources, such as APs 142 at each site, to deliver a high-quality wireless experience to end users, IoT devices, and clients at the site. For example, NMS 130 may include a virtual network assistant (VNA) 133 that implements an event processing platform for providing real-time insights and simplified troubleshooting for IT operations, and automatically takes corrective action or provides recommendations to proactively address wired or wireless network issues. VNA 133 may, for example, include an event processing platform configured to process hundreds or thousands of concurrent streams of network data 137 from sensors and/or agents associated with APs 142 and/or nodes within network 134. For example, VNA 133 of NMS 130 may include an underlying analytics and network error identification engine and alerting system in accordance with various examples described herein. The underlying analytics engine of VNA 133 may apply historical data and models to the inbound event streams to compute assertions, such as identified anomalies or predicted occurrences of events constituting network error conditions. Further, VNA 133 may provide real-time alerting and reporting to notify a site or network administrator via admin device 111 of any predicted events, anomalies, trends, and may perform root cause analysis and automated or assisted error remediation. In some examples, VNA 133 of NMS 130 may apply machine learning techniques to identify the root cause or contributor of error conditions detected or predicted from the streams of network data 137. If the root cause or contributor may be automatically resolved, VNA 133 may invoke one or more corrective actions to correct the root cause or contributor of the error condition, thus automatically improving the underlying SLE metrics and also automatically improving the user experience. Computational resources and components implementing VNA 133 may be part of the NMS 130, may execute on other servers or execution environments, or may be distributed to nodes within network 134 (e.g., routers, switches, controllers, gateways, and the like).

Further example details of operations implemented by the VNA 133 of NMS 130 are described in U.S. Patent No. 9,832,082, issued November 28, 2017, and entitled "MONITORING WIRELESS ACCESS POINT EVENTS," U.S. Patent No. 11,570,038, issued January 31, 2023, and entitled "NETWORK SYSTEM FAULT RESOLUTION USING A MACHINE LEARNING MODEL," U.S. Patent No. 10,985,969, issued April 20, 2021, and entitled "SYSTEMS AND METHODS FOR A VIRTUAL NETWORK ASSISTANT," U.S. Patent No. 10,958,585, issued March 23, 2021, and entitled "METHODS AND APPARATUS FOR FACILITATING FAULT DETECTION AND/OR PREDICTIVE FAULT DETECTION," U.S. Patent No. 10,958,537, issued March 23, 2021, and entitled "METHOD FOR SPATIO-TEMPORAL MODELING," and U.S. Patent No. 10,862,742, issued December 8, 2020, and entitled "METHOD FOR CONVEYING AP ERROR CODES OVER BLE ADVERTISEMENTS," all of which are incorporated herein by reference in their entirety.

In some examples, NMS 130 includes location engine 136 configured to provide one or more location services such as wayfinding, location-based proximity notifications, asset tracking, and location-based analytics that derive insights from client mobility through a site. Estimation of location of a wireless device in a site is essential in many fields such as navigation and tracking of moving objects, identifying location of wireless devices experiencing performance degradation, or for other network troubleshooting operations performed by VNA 133.

For example, location engine 136 may obtain network data 137, such as signal strength measurements (e.g., received signal strength indicator (RSSI) values) of one or more wireless signals (e.g., "beams" or "beacons") transmitted by a network device (e.g., AP or network node) in a specific direction, referred to as "directional beams," and received by the one or more UEs 148. As further described below, a network device may comprise an antenna array including a plurality of antennas configured to emit a plurality of directional beams at a plurality of offset angles. The directional beams may comprise BLE signals or other radio frequency signals. In the example of FIG. 1, AP 142A-1 may include an antenna array configured to generate and transmit a plurality of directional beams within site 102A.

A wireless device in site 102A, such as UE 148A-1, may receive one or more directional beams from AP 142A-1 and may provide NMS 130 with information indicating receipt of the one or more directional beams from AP 142A-1. For example, in response to receiving one or more directional beams from AP 142A-1, UE 148A-1 may send signal strength measurements (e.g., RSSI values) associated with each of the one or more directional beams received from AP 142A-1 and identifying information of UE 148A-1 (or identifying information of a sensor of UE 148A-1 that received the one or more directional beams) to location engine 136 via AP 142A-1. Location engine 136 may determine the location of UE 148A-1 based on the information associated with the one or more directional beams from AP 142A-1 that are received by UE 148A-1. For example, location engine 136 may generate location probability surfaces based on the information associated with the one or more directional beams from AP 142A-1 that are received by UE 148A-1. A location probability surface may represent a probability that the wireless device is located in each of a plurality of geographic areas or volumes. This plurality of geographic regions can be represented in a data structure, such as a two-dimensional geographical area or three-dimensional geographic volume. Additional examples of location determination are described in U.S. Patent No. 10,219,166, issued February 26, 2019, and entitled "METHODS AND APPARATUS FOR GENERATING, TRANSMITTING AND/OR USING BEACONS," U.S. Patent No. 9,743,254, issued August 22, 2017, and entitled "METHODS AND APPARATUS RELATING TO THE USE OF RECEIVED SIGNALS TO DETERMINE WIRELESS TERMINAL LOCATION AND/OR REFINE LOCATION DETERMINATION MODELS," U.S. Patent No. 10,976,406, issued April 13, 2021, and entitled "MULTI-LAYER STATISTICAL WIRELESS TERMINAL LOCATION DETERMINATION," U.S. Patent No. 11,422,224, issued August 23, 2022, and entitled "LOCATION DETERMINATION BASED ON PHASE DIFFERENCES," U.S. Patent No. 11,696,092, issued July 4, 2023, and entitled "MULTI-WIRELESS DEVICE LOCATION DETERMINATION," U.S. Patent No. 11,778,418, issued October 3, 2023, and entitled "ALIGNED MULTI-WIRELESS DEVICE LOCATION DETERMINATION," U.S. Patent No. 12,004,045, issued June 4, 2024, and entitled "DETERMINING LOCATION BASED ON DYNAMIC PATH LOSS EXPONENT (PLE) AND INTERCEPT (INT) ESTIMATION," the entire contents of each of which is incorporated by reference herein.

In some examples, an antenna array of a network device may require modification to incorporate additional chipsets that provide capabilities for new networking standards (e.g., Wi-Fi 7 standard (802.11be)) and/or to include additional antennas to provide additional directional beams for determining the location of wireless devices with more accuracy. Typically, the antenna array of the network device is modified by increasing the size of an antenna substrate to accommodate for the new chipsets or to include additional antennas to transmit additional directional beams. However, increasing the size of the antenna substrate would increase the overall size of the network device, which may be impractical for use in certain sites, such as sites that have small areas or spaces.

In accordance with the techniques described in this disclosure, a network device may include an antenna array configured to transmit a plurality of directional beams at a plurality of offset angles for determining a location of a wireless device in a site. As further described below, a network device, such as one of the network devices in network system 100, may include an antenna array including a plurality of antennas configured to transmit a plurality of directional beams at a plurality of offset angles. By transmitting a plurality of directional beams at a plurality of offset angles, the antenna array may transmit a greater number of directional beams for determining the location of wireless devices, which provides greater accuracy in determining the location of wireless devices in a site, while maintaining a smaller antenna design.

As further described below, the antenna array of the network device may include circuitry that controls the activation of one or more antennas to emit signals and circuitry that controls the phase of the signals to direct energy towards a particular direction (e.g., to produce a given radiation pattern) to generate a directional beam transmitted with one or more offset angles of a plurality of offset angles. As one example, an antenna array of AP 142A-1 may include a plurality of antennas configured to transmit eight equidistant directional beams at a first offset angle (e.g., directional beams transmitted at a first offset angle at 45 degree intervals). For example, the antenna array of AP 142A-1 may transmit a first directional beam at 0 degrees, a second directional beam at 45 degrees, a third directional beam at 90 degrees, a fourth directional beam at 135 degrees, a fifth directional beam at 180 degrees, a sixth directional beam at 225 degrees, a seventh directional beam at 270 degrees, and an eighth directional beam at 315 degrees, collectively referred to herein as a "first set of directional beams at a first offset angle." The antenna array of AP 142A-1 may additionally, or alternatively, transmit eight equidistant directional beams with a second offset angle that is offset from the first set of directional beams (e.g., 22.5 degree offset from the first set of directional beams). For example, the antenna array of AP 142A-1 may transmit a ninth directional beam at 22.5 degrees, a tenth directional beam at 67.5 degrees, an eleventh directional beam at 112.5 degrees, a twelfth directional beam at 157.5 degrees, a thirteenth directional beam at 202.5 degrees, a fourteenth directional beam at 247.5 degrees, a fifteenth directional beam at 292.5 degrees, a sixteenth directional beam at 337.5 degrees, collectively referred to herein as a "second set of directional beams at a second offset angle."

The first set of directional beams offset at the first offset angle, the second set of directional beams offset at the second offset angle, and/or a combination of the first set of directional beams and the second set of directional beams may be used to determine the location of a wireless device in a site. For example, a wireless device such as UE 148A-1, may receive one or more directional beams of the first set of directional beams at the first offset angle, one or more directional beams from the second set of directional beams at the second offset angle, or at least one directional beam from the first set of directional beams at the first offset angle and at least one directional beam from the second set of directional beams at the second offset angle from AP 142A-1. Based on the one or more directional beams received from AP 142A-1, UE 148A-1 may send a signal strength measurement (e.g., RSSI value) for each of the one or more directional beams received from AP 142A-1 and identifying information of UE 148A-1 (or identifying information of a sensor of UE 148A-1 that received the one or more directional beams) to NMS 130 via AP 142A-1.

As one example, UE 148A-1 may receive a first directional beam from the first set of directional beams from AP 142A-1 that has been offset by a first offset angle (e.g., a directional beam transmitted at 45 degrees) and a second directional beam from the second set of directional beams from AP 142A-1 that has been offset from a directional beam of the first set of directional beams by 22.5 degrees (e.g., a directional beam transmitted at 67.5 degrees). UE 148A-1 may send a signal strength measurement of the first directional beam and identifying information of UE 148A-1 (or identifying information of a sensor of UE 148A-1 that received the first directional beam) to location engine 136. UE 148A-1 may also send a signal strength measurement of the second directional beam and identifying information of UE 148A-1 (or identifying information of a sensor of UE 148A-1 that received the second directional beam) to location engine 136.

Based on the information associated with the first directional beam from the first set of directional beams offset at the first offset angle and the second directional beam from the second set of directional beams offset at the second offset angle, location engine 136 may determine the location of UE 148A-1 in site 102A. For example, NMS 130 may generate location probability surfaces for UE 148A-1 based on the signal strength measurements of the first directional beam from the first set of directional beams transmitted at the first offset angle and the second directional beam from the second set of directional beams transmitted at the second offset angle.

In some examples, location engine 136 may send location data indicating the determined location of UE 148A-1 to UE 148A-1 or to admin device 111, or may provide the location data to VNA 133 to detect wireless network anomalies and/or issues in site 102A based on the location data of UE 148A-1.

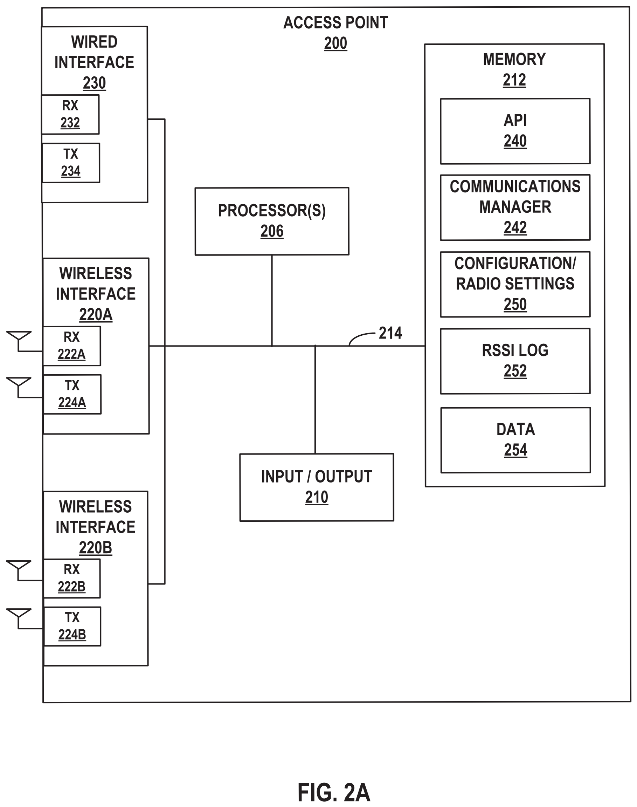

FIG. 2A is a block diagram of an example access point (AP) device 200 configured to transmit a plurality of directional beams at one or more offset angles for determining a location of a wireless device in a site, in accordance with one or more techniques of the disclosure. Example AP device 200 shown in FIG. 2A may be an example of any of AP devices 142 as shown and described herein with respect to FIG. 1. AP device 200 may comprise, for example, a Wi-Fi, Bluetooth and/or Bluetooth Low Energy (BLE) base station, or any other type of wireless access point.

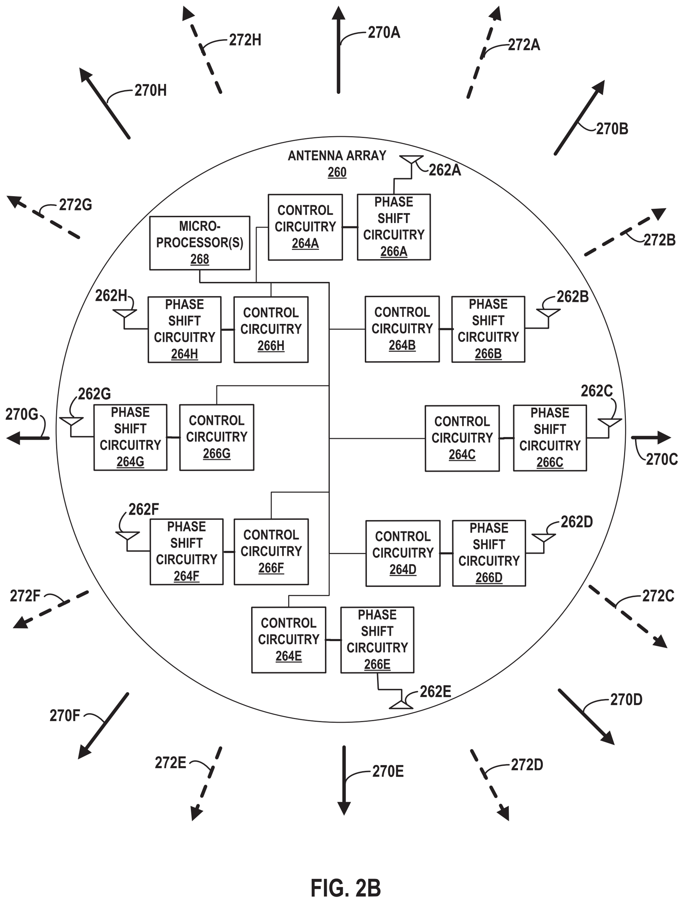

In the example of FIG. 2A, AP device 200 includes a wired interface 230, wireless interfaces 220A-220B, one or more processor(s) 206, memory 212, and an input/output 210 coupled together via a bus 214 over which the various elements may exchange data and information. Wired interface 230 represents a physical network interface and includes a receiver 232 and a transmitter 234 for sending and receiving network communications, e.g., packets. Wired interface 230 couples, either directly or indirectly, AP device 200 to network(s) 134 of FIG. 1. First and second wireless interfaces 220A and 220B represent wireless network interfaces and include receivers 222A and 222B, respectively, each including a receive antenna via which AP device 200 may receive wireless signals from wireless communications devices, such as UEs 148 of FIG. 1. First and second wireless interfaces 220A and 220B further include transmitters 224A and 224B, respectively, each including transmit antennas via which AP device 200 may transmit wireless signals to wireless communications devices, such as UEs 148 of FIG. 1. In some examples, first wireless interface 220A may include a Wi-Fi 802.11 interface (e.g., 2.4 GHz, 5 GHz, 6GHz, or other wireless communication frequency) and second wireless interface 220B may include a Bluetooth interface and/or a Bluetooth Low Energy (BLE) interface. One or both of wireless interfaces(s) 220 may include an array of transmit and/or receive antennas. In some examples, first and/or second wireless interfaces 220A and 220B may alternatively include an ultra-wide band (UWB) wireless interface or may be included in another wireless interface (not shown) of AP device 200. In these examples, first wireless interface 220A may include a UWB wireless transmitter and a UWB wireless receiver. As further described below in FIG. 2B, the array of antennas may be configured to transmit a plurality of directional beams for determining the location of a wireless device of a site, and each of the plurality of directional beams may be offset by one of a plurality of offset angles. However, the example described above is given for example purposes only, and the disclosure is not limited in this respect.

Processor(s) 206 are programmable hardware-based processors configured to execute software instructions, such as those used to define a software or computer program, stored to computer-readable storage media (such as memory 212), such as non-transitory computer-readable media including one or more storage devices (e.g., a disk drive, or an optical drive) or one or more memories (such as Flash memory or RAM) or any other type of volatile or non-volatile memory, that store instructions to cause the one or more processors 206 to perform one or more of the techniques described herein.

Memory 212 includes one or more devices configured to store programming modules and/or data associated with operation of AP device 200. For example, memory 212 may include computer-readable storage media, such as non-transitory computer-readable media including one or more storage devices (e.g., a disk drive, or an optical drive) or one or more memories (such as Flash memory or RAM) or any other type of volatile or non-volatile memory, that store instructions to cause the one or more processor(s) 206 to perform one or more of the techniques described herein.

In this example, memory 212 stores executable software and various data including an application programming interface (API) 240, a communications manager 242, configuration settings 250, RSSI log 252, and data storage 254.

RSSI log 252 includes RSSI values measured by AP device 200 and/or RSSI values measured by a wireless device connected to AP device 200 with respect to one or more wireless signals communicated between AP device 200 and the wireless device. Although example RSSI techniques are described herein, it shall be understood that any method of measuring wireless signals exchanged between two wireless devices may be used, including any type of Wi-Fi ranging technique and/or Bluetooth ranging technique, and the disclosure is not limited in this respect.

The RSSI values may be used by AP device 200, NMS 130, or both, to estimate a distance between AP device 200 and the one or more other wireless devices in the wireless network. As another example, AP device 200 and one or more other wireless devices may perform round trip time (RTT) (e.g., time-of-flight (ToF)) measurements between each other and may then be used by AP device 200, NMS 130, or both, to estimate the distance between AP device 200 and the one or more other devices in the wireless network. Example Wi-Fi RTT techniques are described by the IEEE 802.11mc (e.g., IEEE 802.11-2016) standard, which defines a fine-time measurement (FTM) protocol that can be used to measure the Wi-Fi signal round trip time (RTT). In some examples, AP device 200 sends the RSSI and/or RTT values to NMS 130 via API 240, and NMS 130 estimates a distance between AP device 200 and one or more other wireless devices based on the received RSSI and/or RTT values received from each of the other wireless devices. In other examples, AP device 200 estimates the distance between itself and one or more other wireless devices in the wireless network based on the RSSI and/or RTT values, and transmits the estimated distances to NMS 130. The estimated distances between AP device 200 and the one or more other wireless devices may also be determined by any other computing device, and the disclosure is not limited in this respect. In accordance with one or more techniques of the disclosure, NMS 130 may obtain the RSSI and/or RTT values and generate a network graph of wireless devices in a wireless network.

Network data stored in data storage 254 may include, for example, data concerning or associated with AP events and/or UE events. In some examples, the network events are classified as positive network events, neutral network events, and/or negative network events. The network events may include, for example, memory status, reboot events, crash events, Ethernet port status, upgrade failure events, firmware upgrade events, configuration changes, authentication events, DNS events, DHCP events, one or more types of roaming events, one or more types of proximity events, etc., as well as a time and date stamp for each event. Data 254 may store any data used and/or generated by AP device 200, including data collected from UEs 148. Access point device 200 may send network data stored in data storage 254 to NMS 130 via API 240.

Communications manager 242 includes program code that, when executed by processor(s) 206, allow AP device 200 to communicate with UEs 148 and/or network(s) 134 via any of interface(s) 230 and/or 220A-220B. Configuration settings 250 include any device settings for AP device 200 such as radio settings for each of wireless interface(s) 220A-220B. These settings may be configured manually or may be remotely monitored and/or automatically managed or configured by NMS 130 to optimize wireless network performance on a periodic (e.g., hourly or daily) basis.

Input / output (I/O) 210 represents physical hardware components that enable interaction with a user, such as buttons, a touchscreen, a display and the like. Although not shown, memory 212 typically stores executable software for controlling a user interface with respect to input received via I/O 210.

In accordance with the techniques described in this disclosure, AP device 200 may transmit a plurality of directional beams at a plurality of offset angles for determining a location of a wireless device communicably coupled to AP device 200. For example, an antenna array of AP device 200, such as antenna array 260 in FIG. 2B, may transmit a first set of directional beams that are offset by a first offset angle (e.g., 45 degrees) and/or a second set of directional beams that are offset by a second offset angle (e.g., 22.5 degree offset from the first offset angle). In some examples, the first set of directional beams and second set of directional beams may include BLE signals emitted from one or more antennas of wireless interface 220B implementing a BLE interface.

AP device 200 may receive information from a wireless device (e.g., UE 148A-1 of FIG. 1) indicating receipt of the one or more directional beams from AP 142A-1. For example, AP device 200 may receive a signal strength measurement of each of the directional beams received by the wireless device and identifying information of the wireless device (or sensor of the wireless device that received a directional beam), and may store the information in RSSI log 252. AP device 200 may then send the information to NMS 130 to determine the location of the wireless device. For example, AP device may send the information to NMS 130 via API 240.

FIG. 2B is a block diagram of an example antenna array 260 configured to transmit a plurality of directional beams at one or more offset angles for determining a location of a wireless device in a site. Antenna array 260 may represent an example antenna array of one or both of wireless interfaces 220 of AP device 200 of FIG. 2A, but may represent an antenna array of any device configured to transmit a plurality of directional beams at a plurality of offset angles for determining the location of a wireless device in a site.

In the example of FIG. 2B, antenna array 260 includes antennas 262A-262H and one or more microprocessors 268. Antennas 262A-262H are connected to control circuitry 264A-264H and phase shift circuitry 266A-266H, respectively. Control circuitry 264 may each control the propagation of a signal for a corresponding antenna. Control circuitry 264 may each comprise one or more switches (e.g., Millimeter-wave and Microwave (MMIC) switches) connected to one or more general-purpose input/output (GPIOs) to control the propagation of signals, such as to control whether a signal is to be emitted by an antenna connected to the control circuitry. For example, control circuitry 264A is configured to control whether a signal is to be emitted by antenna 262A, control circuitry 264B is configured to control whether a signal is to be emitted by antenna 262B, and so on. Each control circuitry 264 may also control whether a signal to be emitted by an antenna passes through phase shift circuitry. Phase shift circuitry 266 may each comprise circuitry configured to apply a phase shift to a signal to control a direction of the signal to be emitted by an antenna. As one example, phase shift circuitry 266 may include one or more capacitors to apply a positive phase shift ("lead") to a signal and/or one or more inductors to apply a negative phase shift (e.g., "lag") to a signal. In this example, phase shift circuit 266A may apply a positive phase shift or a negative phase shift to a signal to be emitted by antenna 262A, phase shift circuit 266B may apply a positive phase shift or a negative phase shift to a signal to be emitted by antenna 262B, and so on.

Microprocessor(s) 268 are programmable hardware-based processors configured to execute instructions (otherwise referred to herein as "controls") that cause microprocessor(s) 268 to control the propagation of signals to be emitted by one or more antennas 262 to generate directional beams 270A-270H with a first offset angle and/or directional beams 272A-272H with a second offset angle, as further described and illustrated in FIG. 2B. For example, the instructions may cause microprocessor(s) 268 to generate and transmit eight equidistant directional beams at a first offset angle (e.g., directional beams transmitted at a first offset angle at 45 degree intervals). In the example of FIG. 2B, the instructions may cause microprocessor(s) 268 to generate and transmit a first directional beam 270A at 0 degrees, a second directional beam 270B at 45 degrees, a third directional beam 270C at 90 degrees, a fourth directional beam 270D at 135 degrees, a fifth directional beam 270E at 180 degrees, a sixth directional beam 270F at 225 degrees, a seventh directional beam 270G at 270 degrees, and an eighth directional beam 270H at 315 degrees (collectively referred to herein as a "first set of directional beams at a first offset angle"). The instructions may also cause microprocessor(s) 268 to generate and transmit eight equidistant directional beams at a second offset angle (e.g., directional beams transmitted at a 22.5 degree offset from the first set of directional beams). In the example of FIG. 2B, the instructions may cause microprocessor(s) 268 to generate and transmit a ninth directional beam 272A at 22.5 degrees, a tenth directional beam 272B at 67.5 degrees, an eleventh directional beam 272C at 112.5 degrees, a twelfth directional beam 272D at 157.5 degrees, a thirteenth directional beam 272E at 202.5 degrees, a fourteenth directional beam 272F at 247.5 degrees, a fifteenth directional beam 272G at 292.5 degrees, a sixteenth directional beam 272H at 337.5 degrees (collectively referred to herein as a "second set of directional beams at a second offset angle"). The instructions may be stored in computer-readable storage media (not shown), such as non-transitory computer-readable media including one or more storage devices (e.g., a disk drive, or an optical drive) or one or more memories (such as Flash memory or RAM) or any other type of volatile or non-volatile memory, that store instructions to cause the one or more microprocessors 268 to control the propagation of signals to be emitted by one or more antennas 262.

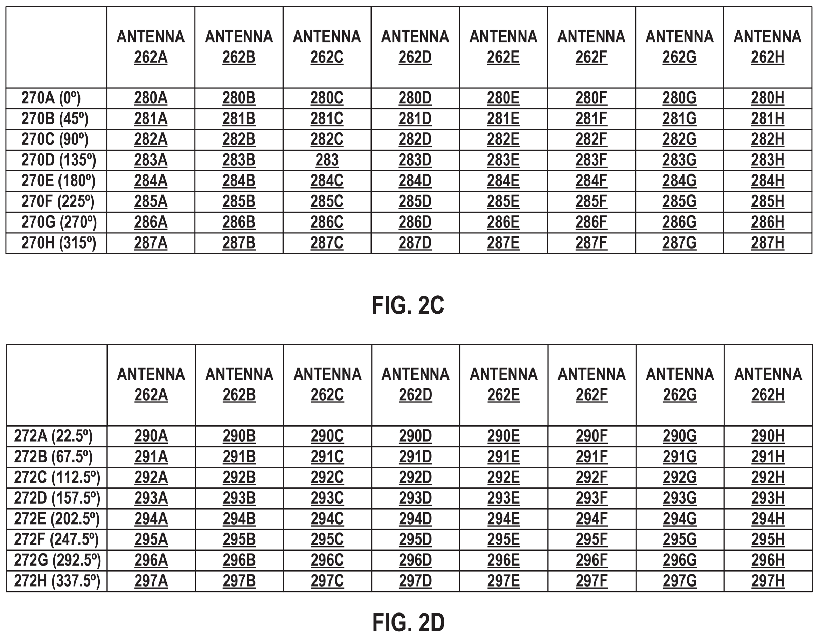

The instructions may specify, one or more GPIOs of control circuitry 264 to which microprocessor(s) 268 is to provide control signals (e.g., a voltage) to cause antennas 262 to emit signals that together form directional beams 270A-270H at a first offset angle (e.g., 45 degrees), such as the example illustrated in FIG. 2C. In this example, to form one or more signals into directional beam 270A, the instructions may cause microprocessor(s) 268 to provide control signals according to controls 280A-280H. Controls 280A-280H may each specify, for example, whether to (or not to) apply a control signal to a corresponding GPIO of control circuitry 264 to propagate a signal to a corresponding antenna 262 and whether to (or not to) apply a control signal to a corresponding GPIO of phase shift circuitry 266 to apply a phase shift to the signal to be emitted by a corresponding antenna 262.

As one example, control 280A may cause microprocessor(s) 268 to apply a control signal to a corresponding GPIO of control circuitry 264A to propagate a signal to antenna 262A and a control signal to one or more GPIOs of phase shift circuitry 266A to apply a phase shift to the signal to be emitted by antenna 262A; control 280D may cause microprocessor(s) 268 to apply a control signal to a corresponding GPIO of control circuitry 264D to propagate a signal to antenna 262D and a control signal to one or more GPIOs of phase shift circuitry 266D to apply a phase shift to the signal to be emitted by antenna 262D; control 280E may cause microprocessor(s) 268 to apply a control signal to a corresponding GPIO of control circuitry 264E to propagate a signal to antenna 262E and a control signal to one or more GPIOs of phase shift circuitry 266E to apply a phase shift to the signal to be emitted by antenna 262E; and control 280F may cause microprocessor(s) 268 to apply a control signal to a corresponding GPIO of control circuitry 264F to propagate a signal to antenna 262F and a control signal to one or more GPIOs of phase shift circuitry 266F to apply a phase shift to the signal to be emitted by antenna 262F. In some examples, the instructions may also cause microprocessor(s) 268 to provide control signals to GPIOs of one or more noise filtering circuitry to filter noise from one or more signals used to form directional beam 270A.

To form one or more signals into directional beam 270B, controls 281A-281H may cause microprocessor(s) 268 to provide control signals to corresponding GPIOs of control circuitry 264 to propagate a signal to corresponding antennas 262 and control signals to corresponding GPIOs of phase shift circuitry 266 to apply a phase shift to corresponding signals. To form one or more signals into directional beam 270C, controls 282A-282H may cause microprocessor(s) 268 to provide control signals to corresponding GPIOs of control circuitry 264 to propagate a signal to corresponding antennas 262 and control signals to corresponding GPIOs of phase shift circuitry 266 to apply a phase shift to corresponding signals, and so on.

Additionally, or alternatively, the instructions may specify, for example, one or more GPIOs of control circuitry 264 to which microprocessor(s) 268 is to provide control signals to cause antennas 262 to emit signals that together form directional beams 272A-272H with a second offset angle that is offset from directional beams 270 (e.g., 22.5 degrees from the directional beams 270), such as the example illustrated in FIG. 2D. For example, to form one or more signals into directional beam 272A, the instructions may cause microprocessor(s) 268 to provide control signals according to controls 290A-290H. Controls 290A-290H may each specify, for example, whether to (or not to) apply a control signal to a corresponding GPIO of control circuitry 264 to propagate a signal to a corresponding antenna 262 and whether to (or not to) apply a control signal to a corresponding GPIO of phase shift circuitry 266 to apply a phase shift to the signal to be emitted by a corresponding antenna 262.

As one example, control 290A may cause microprocessor(s) 268 to apply a control signal to a corresponding GPIO of control circuitry 264A to propagate a signal to antenna 262A and a control signal to one or more GPIOs of phase shift circuitry 266A to apply a phase shift to the signal to be emitted by antenna 262A; control signal 290B may cause microprocessor(s) 268 to apply a control signal to a corresponding GPIO of control circuitry 264B to propagate a signal to antenna 262B and a control signal to one or more GPIOs of phase shift circuitry 266B to apply a phase shift to the signal to be emitted by antenna 262B; control signal 290E may cause microprocessor(s) 268 to apply a control signal to a corresponding GPIO of control circuitry 264E to propagate a signal to antenna 262E and a control signal to one or more GPIOs of phase shift circuitry 266E to apply a phase shift to the signal to be emitted by antenna 262E; and control 290F may cause microprocessor(s) 268 to apply a control signal to a corresponding GPIO of control circuitry 264F to propagate a signal to antenna 262F and a control signal to one or more GPIOs of phase shift circuitry 266F to apply a phase shift to the signal to be emitted by antenna 262F. In some examples, the instructions may also cause microprocessor(s) 268 to provide control signals to GPIOs of one or more noise filtering circuitry to filter noise from one or more signals used to form directional beam 272A.

To form one or more signals into directional beam 272B, controls 291A-291H may cause microprocessor(s) 268 to provide control signals to corresponding GPIOs of control circuitry 264 to propagate a signal to corresponding antennas 262 and control signals to corresponding GPIOs of phase shift circuitry 266 to apply a phase shift to corresponding signals. To form one or more signals into directional beam 272C, controls 292A-292H may cause microprocessor(s) 268 to provide control signals to corresponding GPIOs of control circuitry 264 to propagate a signal to corresponding antennas 262 and control signals to corresponding GPIOs of phase shift circuitry 266 to apply a phase shift to corresponding signals, and so on.

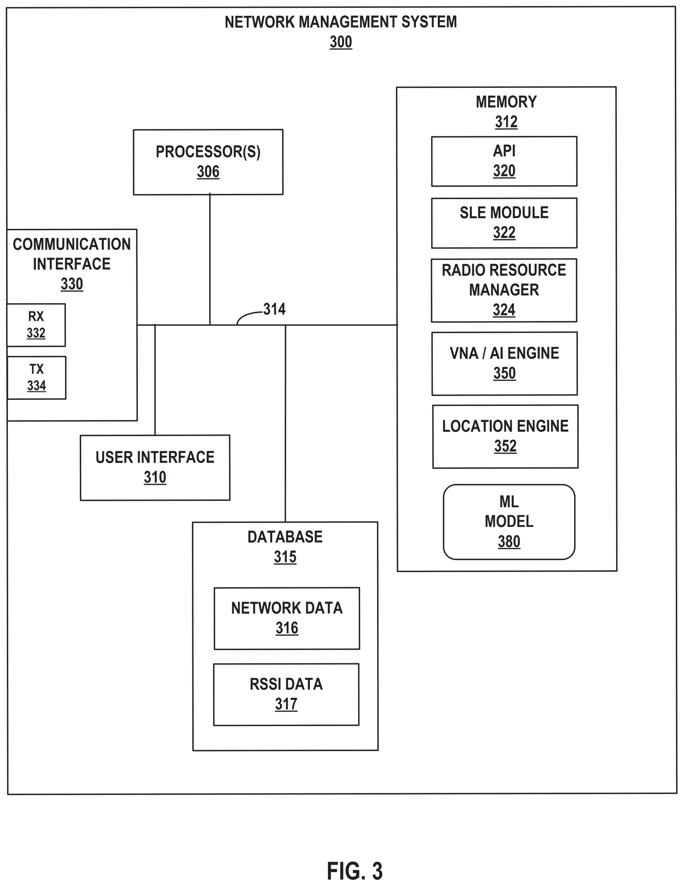

FIG. 3 shows an example NMS 300 having a location engine 352 configured to determine a location of a wireless device in a site based on a plurality of directional beams transmitted with a plurality of offset angles, in accordance with one or more techniques of this disclosure. Example NMS 300 and location engine 352 shown in FIG. 3 may be an example of NMS 130 and location engine 136 as shown and described herein with respect to FIG. 1.

NMS 300 includes a communications interface 330, one or more processor(s) 306, a user interface 310, memory 312, and database 315. The various elements are coupled together via a bus 314 over which the various elements may exchange data and information.

Processor(s) 306 execute software instructions, such as those used to define a software or computer program, stored to computer-readable storage media (such as memory 312), such as non-transitory computer-readable media including one or more storage devices (e.g., a disk drive, or an optical drive) or one or more memories (such as Flash memory or RAM) or any other type of volatile or non-volatile memory, that store instructions to cause the one or more processors 306 to perform the techniques described herein.

Communications interface 330 may include, for example, an Ethernet interface. Communications interface 330 couples NMS 300 to a network and/or the Internet, such as any of network(s) 134 as shown in FIG. 1, and/or any local area networks. Communications interface 330 includes a receiver (RX) 332 and a transmitter (TX) 334 by which NMS 300 receives/transmits data and information to/from any of APs 142, network node 146, servers 110, 116, 122, 128, and/or any other devices or systems forming part of network 100 such as shown in FIG. 1.

Database 315 may store network data 316 and RSSI data 317 collected and/or measured by devices in a wireless network (e.g., UEs 148 and/or APs 142 of FIG. 1). Network data 316 may include, for example, such as information indicative of events, anomalies, trends, SLE-related data, and/or any information indicative of a performance of a device or network. RSSI data 317 may include, for example, signal strength measurements of signals transmitted by an AP device (e.g., AP 142A-1 of FIG. 1) and received by a wireless device (e.g., UE 148A-1 of FIG. 1) with which location engine 352 may use to determine the location of the wireless device in a site.

Memory 312 includes one or more devices configured to store programming modules and/or data associated with operation of NMS 300. For example, memory 312 may include computer-readable storage media, such as non-transitory computer-readable media including one or more storage devices (e.g., a disk drive, or an optical drive) or one or more memories (such as Flash memory or RAM) or any other type of volatile or non-volatile memory, that store instructions to cause the one or more processor(s) 306 to perform the techniques described herein.

In this example, memory 312 includes an API 320, an SLE module 322, a radio resource management (RRM) engine 324, a virtual network assistant (VNA)/AI engine 350, and a location engine 352. NMS 300 may also include any other programmed modules, software engines and/or interfaces configured for obtaining information associated with wireless signals exchanged within a wireless network of a site and determining a location of wireless devices in the site.

SLE module 322 enables set up and tracking of thresholds for SLE metrics for each network 106A-106N. SLE module 322 further analyzes SLE-related data collected by APs, such as any of APs 142 from UEs 148 in each wireless network 106A-106N. For example, APs 142A-1 through 142A-N collect SLE-related data from UEs 148A-1 through 148A-N currently connected to wireless network 106A. This data is transmitted to NMS 300, which executes SLE module 322 to determine one or more SLE metrics for each UE 148A-1 through 148A-N currently connected to wireless network 106A. This data, in addition to any network data collected by one or more APs 142A-1 through 142A-N in wireless network 106A, is transmitted to NMS 300 and stored in database 315.

RRM engine 324 monitors one or more metrics for each site 106A-106N in order to learn and optimize the RF environment at each site. For example, RRM engine 324 may monitor the coverage and capacity SLE metrics for a wireless network 106 at a site 102 in order to identify potential issues with SLE coverage and/or capacity in the wireless network 106 and to make adjustments to the radio settings of the access points at each site to address the identified issues. For example, RRM engine 324 may determine channel and transmit power distribution across all APs 142 in each network 106A-106N. For example, RRM engine 324 may monitor events, power, channel, bandwidth, and number of clients connected to each AP. RRM engine 324 may further automatically change or update configurations of one or more APs 142 at a site 106 with an aim to improve the coverage and capacity SLE metrics and thus to provide an improved wireless experience for the user.

VNA/AI engine 350 may operate substantially similar to VNA 133 of FIG. 1. VNA/AI engine 350 analyzes data received from APs 142/200 as well as its own data to identify when undesired to abnormal states are encountered in one of wireless networks 106A-106N. For example, VNA/AI engine 350 may identify the root cause of any undesired or abnormal states, e.g., any poor SLE metric(s) at one or more of wireless network 106A-106N. In addition, VNA/AI engine 350 may automatically invoke one or more corrective actions intended to address the identified root cause(s) of one or more poor SLE metrics. Examples of corrective actions that may be automatically invoked by VNA/AI engine 350 may include, but are not limited to, invoking RRM 360 to reboot one or more APs, adjusting/modifying the transmit power of a specific radio in a specific AP, adding SSID configuration to a specific AP, changing channels on an AP or a set of APs, etc. The corrective actions may further include restarting a switch and/or a router, invoke downloading of new software to an AP, switch, or router, etc. These corrective actions are given for example purposes only, and the disclosure is not limited in this respect. If automatic corrective actions are not available or do not adequately resolve the root cause, VNA/AI engine 350 may proactively provide a notification including recommended corrective actions to be taken by IT personnel to address the network error.

In accordance with one or more techniques of this disclosure, NMS 300 includes location engine 352 that is configured to determine the location of a wireless device in a site based on a plurality of directional beams transmitted with a plurality of offset angles. As described above, location engine 352 may obtain information associated with one or more directional beams received by the wireless device (e.g., signal strength measurements of the directional beams received by the wireless device), which may be stored in database 315 as RSSI data 317. Based on the information associated with one or more directional beams received by the wireless device, location engine 352 may generate location probability surfaces to determine a probability that the wireless device is located in each of a plurality of different geographic areas or volumes. For example, NMS 300 may receive, from UE 148A-1, a signal strength measurement of a first directional beam from a first set of directional beams emitted by AP 142A-1 and received by UE 148A-1 that has been offset by a first offset angle (e.g., directional beam 270B of FIG. 2B transmitted at 45 degrees) and a signal strength measurement of a second directional beam from a second set of directional beams emitted by AP 142A-1 and received by UE 148A-1 that has been offset from a directional beam of the first set of directional beams by 22.5 degrees (e.g., directional beam 272B of FIG. 2B transmitted at 67.5 degrees). NMS 300 may also receive, from UE 148A-1, identifying information of UE 148A-1 (or identifying information of a sensor of UE 148A-1 that received the first directional beam and the second directional beam).

Based on the information associated with the first directional beam from the first set of directional beams offset at the first offset angle and the second directional beam from the second set of directional beams offset at the second offset angle, location engine 352 may determine the location of UE 148A-1 in site 102A. For example, location engine 352 may generate location probability surfaces for UE 148A-1 based on the signal strength measurement of directional beam 270B from the first set of directional beams transmitted at the first offset angle (e.g., a directional beam transmitted at 45 degrees) and the signal strength measurement of directional beam 272B from the second set of directional beams transmitted at the second offset angle (e.g., a directional beam transmitted at 67.5 degrees).

Location engine 352 may perform an action based on the location of UE 148A-1, such as generate location data of the wireless device (e.g., map and coordinates) and may send the location data to the wireless device or an admin device (e.g., admin device 111 of FIG. 1) for display via a user interface. In some examples, location engine 352 may send the location data to VNA 350 to perform troubleshooting, management, and/or analytics based on the location data of UE 148A-1, etc.

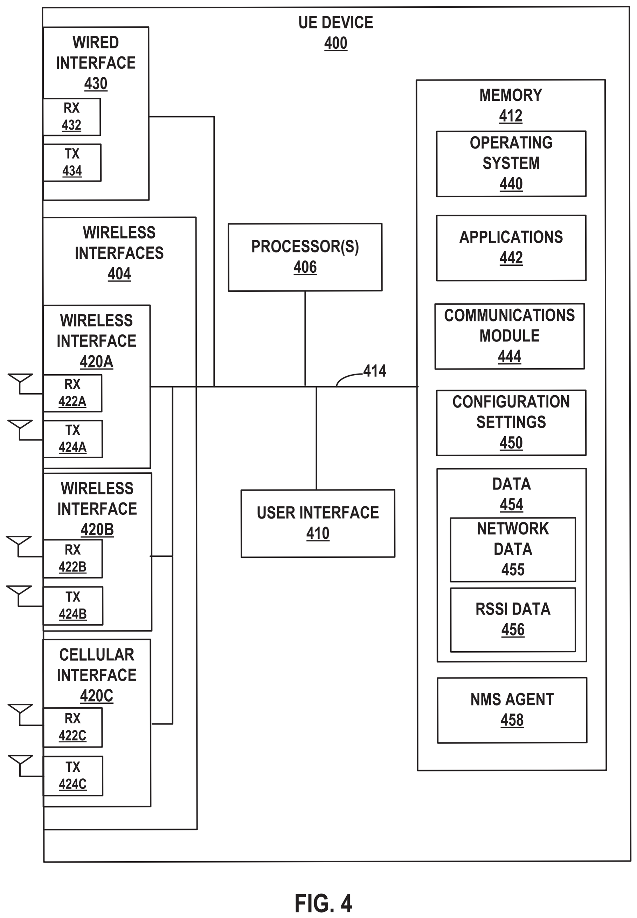

FIG. 4 is a block diagram of an example user equipment device, in accordance with one or more techniques of the disclosure. Example UE device 400 shown in FIG. 4 may be an example of any of UEs 148 as shown and described herein with respect to FIG. 1. UE device 400 may include any type of wireless client device, and the disclosure is not limited in this respect. For example, UE device 400 may include a mobile device such as a smart phone, tablet or laptop computer, a personal digital assistant (PDA), a wireless terminal, a smart watch, a smart ring, or any other type of mobile or wearable device.

UE device 400 includes a wired interface 430, wireless interfaces 420A-420C, one or more processor(s) 406, memory 412, and a user interface 410. The various elements are coupled together via a bus 414 over which the various elements may exchange data and information. Wired interface 430 represents a physical network interface and includes a receiver 432 and a transmitter 434. Wired interface 430 may be used, if desired, to couple, either directly or indirectly, UE device 400 to a wired network device, such as one of switches 146 of FIG. 1, within the wired network via a cable, such as an Ethernet cable.

First, second, and third wireless interfaces 420A, 420B, and 420C include receivers 422A, 422B, and 422C, respectively, each including a receive antenna via which UE device 400 may receive wireless signals from wireless communications devices, such as APs 142 of FIG. 1, AP 200 of FIG. 2, other UEs 148, or other devices configured for wireless communication. First, second, and third wireless interfaces 420A, 420B, and 420C further include transmitters 424A, 424B, and 424C, respectively, each including transmit antennas via which UE device 400 may transmit wireless signals to wireless communications devices, such as APs 142 of FIG. 1, AP 200 of FIG. 2, other UEs 148, and/or other devices configured for wireless communication. In some examples, first wireless interface 420A may include a Wi-Fi 802.11 interface (e.g., 2.4 GHz and/or 5 GHz) and second wireless interface 420B may include a Bluetooth interface and/or a Bluetooth Low Energy interface. Third wireless interface 420C may include, for example, a cellular interface through which UE device 400 may connect to a cellular network.

Processor(s) 406 execute software instructions, such as those used to define a software or computer program, stored to computer-readable storage media (such as memory 412), such as non-transitory computer-readable media including one or more storage devices (e.g., a disk drive, or an optical drive) or one or more memories (such as Flash memory or RAM) or any other type of volatile or non-volatile memory, that store instructions to cause the one or more processors 406 to perform the techniques described herein.

Memory 412 includes one or more devices configured to store programming modules and/or data associated with operation of UE device400. For example, memory 412 may include a computer-readable storage media, such as non-transitory computer-readable media including one or more storage devices (e.g., a disk drive, or an optical drive) or one or more memories (such as Flash memory or RAM) or any other type of volatile or non-volatile memory, that store instructions to cause the one or more processor(s) 406 to perform the techniques described herein.

In this example, memory 412 includes an operating system 440, applications 442, a communications module 444, configuration settings 450, and data storage 454. Communications module 444 includes program code that, when executed by processor(s) 406, enables UE device 400 to communicate using any of wired interface(s) 430, wireless interfaces 420A-420B and/or cellular interface 420C. Configuration settings 450 include any device settings for UE device 400 and/or settings for each of wireless interface(s) 420A-420B and/or cellular interface 420C.

Data storage 454 may store any data used and/or generated by UE device 400, such as network data 455 including event data (e.g., data indicative of normal events or error events), telemetry data, and/or other SLE-related data indicative of the performance and/or status of the wireless network, and RSSI data 456 including signal strength measurements of one or more directional beams received by UE device 400 from a network device (e.g., AP 142A-1 of FIG. 1) configured to transmit a plurality of directional beams at one or more offset angles for determining the location of UE device 400.

In some examples, UE device 400 may include an NMS agent 456. NMS agent 456 is a software agent of NMS 130 that is installed on UE device 400. In some examples, NMS agent 456 can be implemented as a software application running on UE device 400. NMS agent 456 may provide location services for UE device 400. For example, UE device 400 may receive one or more directional beams transmitted by a network device (e.g., AP 142A-1 of FIG. 1), such as one or more BLE signals, via receiver 422B of wireless interface 420B. UE device 400 may store information associated with the one or more directional beams received by UE device 400 in RSSI data 456, such as signal strength measurements associated with the one or more BLE signals received from AP 142A-1 and identifying information of receiver 422B. As described herein, UE device 400 may send RSSI data 456 to NMS 130 via the network device communicatively coupled to UE device 400 (or directly to NMS 130), which in turn may determine the location of UE device 400 based on RSSI data 456. In some examples, UE device 400 may receive location information from NMS 130, such as coordinates of UE device 400 to be displayed on a map of the site.

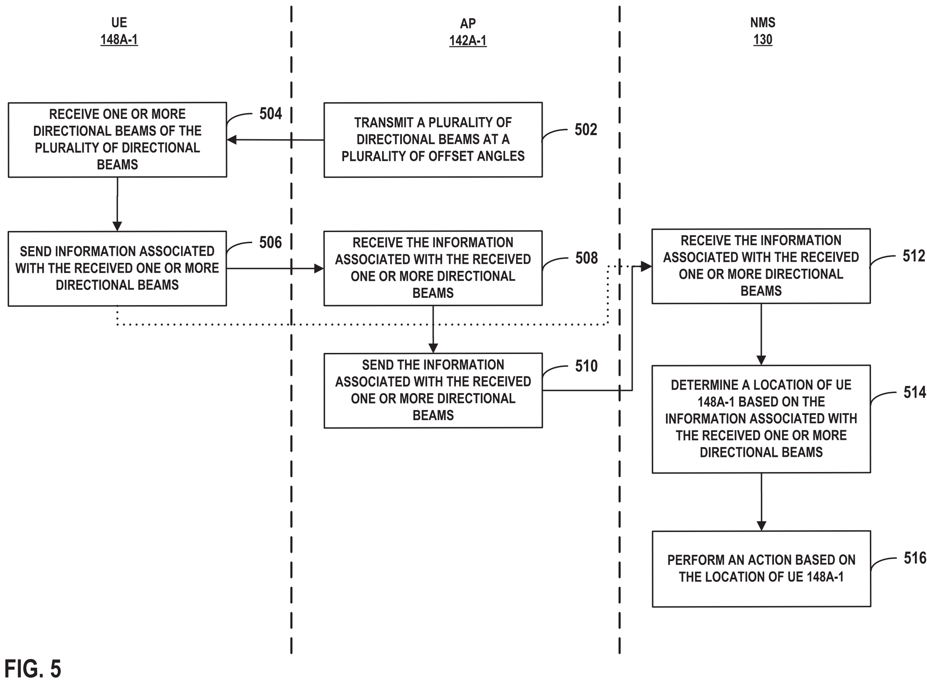

FIG. 5 is a flowchart of an example operation for determining the location of a wireless device in a site based on a plurality of directional beams transmitted with a plurality of offset angles, in accordance with one or more techniques of this disclosure. For ease of illustration, FIG. 5 is described with respect to UE 148A-1, AP 142A-1, and NMS 130 of FIG. 1, but may represent any user equipment and any network device in network system 100 of FIG. 1.

In the example of FIG. 5, a network device, such as AP 142A-1 of FIG. 1, may transmit a plurality of directional beams with a plurality of offset angles (502). For example, AP 142A-1 may comprise an antenna array including a plurality of antennas configured to transmit one or more signals towards a particular direction (e.g., to produce a given radiation pattern) to generate a directional beam transmitted with one or more offset angles. Each antenna of the antenna array may be connected to control circuitry (e.g., control circuitry 264A-264H of FIG. 2B) configured to control the propagation of a signal for a corresponding antenna and phase shift circuitry (e.g., phase shift circuitry 266A-266H of FIG. 2B) configured to apply a phase shift to a signal to control a direction of the signal to be emitted by an antenna. As one example, the phase shift circuitry may apply a positive phase shift ("lead") or a negative phase shift (e.g., "lag") to a signal. To form one or more signals into a directional beam, one or more microprocessors may execute instructions that specify, for example, one or more GPIOs of control circuitry and/or phase shift circuitry, as described in FIGS. 2C and 2D above. AP 142A-1 may transmit a first set of directional beams at a first offset angle (e.g., directional beams 270A-270H of FIG. 2B transmitted with a first offset angle at 45 degree intervals) and a second set of directional beams transmitted at a second offset angle that is offset from the first set of directional beams (e.g., directional beams 272A-272H of FIG. 2B transmitted at a 22.5 degree offset angle from the first set of directional beams).

A wireless device in a site, such as UE 148A-1 in site 102A of FIG. 1, may receive one or more directional beams of the plurality of directional beams (504). As one example, UE 148A-1 may receive a first directional beam of the first set of directional beams (e.g., directional beam 270B of FIG. 2B) and a second directional beam of the second set of directional beams (e.g., directional beam 272B of FIG. 2B). UE 148A-1 may send information associated with the received one or more directional beams (506). For example, UE 148A-1 may send a signal strength measurement (e.g., RSSI value) of the first directional beam and information identifying UE 148A-1 (or a sensor of UE 148A-1 that received the first directional beam), and a signal strength measurement of the second directional beam and information identifying UE 148A-1 (or a sensor of UE 148A-1 that received the second directional beam) to location engine 136 of NMS 130, either directly (e.g., step 506) or indirectly via AP 142A-1 (e.g., steps 508 and 510).

Location engine 136 of NMS 130 may receive the information associated with the received one or more directional beams (512) and determine a location of UE 148A-1 based on the information associated with the received one or more directional beams (514). For example, location engine 136 of NMS 130 may generate location probability surfaces based on the signal strength measurement of the first directional beam and the signal strength measurement of the second directional beam.

Based on the location of UE 148A-1, NMS 130 may perform an action, such as output location data (e.g., coordinates) of UE 148A-1 on a map of the site, send the location data to VNA 133 to perform troubleshooting, management, and/or analytics based on the location data of UE 148A-1, etc.

Thus, from one perspective, there have now been described techniques for determining a location of a wireless device in a site based on a plurality of directional beams transmitted with a plurality of offset angles. For example, a network device comprises a plurality of directional antennas configured to transmit a plurality of directional beams, wherein each directional beam of the plurality of directional beams offset by one of a plurality of offset angles, wherein at least one directional beam of the plurality of directional beams is formed by one or more signals with a phase shift. The processing circuitry of the network device is configured to send, to a network management system, information associated with one or more directional beams of the plurality of directional beams that are received by a wireless device to determine a location of the wireless device in a site.

The techniques described herein may be implemented in hardware, software, firmware, or any combination thereof. Various features described as modules, units or components may be implemented together in an integrated logic device or separately as discrete but interoperable logic devices or other hardware devices. In some cases, various features of electronic circuitry may be implemented as one or more integrated circuit devices, such as an integrated circuit chip or chipset.

If implemented in hardware, this disclosure may be directed to an apparatus such as a processor or an integrated circuit device, such as an integrated circuit chip or chipset. Alternatively, or additionally, if implemented in software or firmware, the techniques may be realized at least in part by a computer-readable data storage medium comprising instructions that, when executed, cause a processor to perform one or more of the methods described above. For example, the computer-readable data storage medium may store such instructions for execution by a processor.

A computer-readable medium may form part of a computer program product, which may include packaging materials. A computer-readable medium may comprise a computer data storage medium such as random-access memory (RAM), read-only memory (ROM), non-volatile random-access memory (NVRAM), electrically erasable programmable read-only memory (EEPROM), Flash memory, magnetic or optical data storage media, and the like. In some examples, an article of manufacture may comprise one or more computer-readable storage media. Additionally, or alternatively, a computer-readable medium can include transient media such as carrier waves and transmission media.

In some examples, the computer-readable storage media may comprise non-transitory media. The term "non-transitory" may indicate that the storage medium is not embodied in a carrier wave or a propagated signal. In certain examples, a non-transitory storage medium may store data that can, over time, change (e.g., in RAM or cache).

The code or instructions may be software and/or firmware executed by processing circuitry including one or more processors, such as one or more digital signal processors (DSPs), general purpose microprocessors, application-specific integrated circuits (ASICs), field-programmable gate arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, functionality described in this disclosure may be provided within software modules or hardware modules.

Further examples of feature combinations taught by the present disclosure are set out in the following numbered clauses:
1. A network device comprising:
   a plurality of directional antennas configured to transmit a plurality of directional beams, wherein each directional beam of the plurality of directional beams is offset by one of a plurality of offset angles, wherein at least one directional beam of the plurality of directional beams is formed by one or more signals with a phase shift; and
   processing circuitry configured to send, to a network management system, information associated with one or more directional beams of the plurality of directional beams that are received by a wireless device to determine a location of the wireless device in a site.
2. The network device of clause 1, wherein the plurality of directional beams comprises:
   a first set of directional beams transmitted at a first offset angle; and
   a second set of directional beams transmitted at a second offset angle.
3. The network device of clause 2, wherein the second set of directional beams are offset from the first set of directional beams transmitted at the first offset angle.
4. The network device of clause 2 or clause 3, wherein the second set of directional beams transmitted at the second offset angle are offset from the first set of directional beams by 22.5 degrees.
5. The network device of any preceding clause,
   wherein the plurality of directional antennas comprises eight directional antennas, and
   wherein the plurality of directional beams comprises sixteen directional beams, wherein the sixteen directional beams comprise a first set of eight directional beams transmitted at a first offset angle and a second set of eight directional beams transmitted at a second offset angle.
6. The network device of clause 5,
   wherein the first set of eight directional beams transmitted at the first offset angle are transmitted at a 45 degree interval, and
   wherein the second set of eight directional beams transmitted at the second offset angle are transmitted at a 22.5 degree offset from the first set of eight directional beams.
7. The network device of any preceding clause, wherein the at least one directional beam is formed by a first signal that has the phase shift and a second signal that does not have the phase shift.
8. The network device of any preceding clause, further comprising:
   control circuitry configured to control propagation of the one or more signals to the plurality of directional antennas; and
   phase shift circuitry configured to apply the phase shift to the one or more signals.
9. The network device of any preceding clause, wherein the phase shift comprises at least one of a positive phase shift or a negative phase shift.
10. The network device of any preceding clause, wherein the information associated with the one or more directional beams of the plurality of directional beams that are received by the wireless device comprise signal strength measurements of the one or more directional beams of the plurality of directional beams that are received by the wireless device.
11. A network management system, comprising:
   memory; and
   processing circuitry coupled to the memory, the processing circuitry configured to:
      receive signal strength measurements associated with a plurality of directional beams received by a wireless device, wherein the plurality of directional beams comprises one or more directional beams of a first set of directional beams transmitted with a first offset angle and one or more directional beams of a second set of directional beams transmitted with a second offset angle that is offset from the first set of directional beams transmitted with the first offset angle;
      determine a location of the wireless device in a site based on the signal strength measurements; and
      perform an action based on the location of the wireless device.
12. The network management system of clause 11, wherein to determine the location of the wireless device in the site based on the signal strength measurements, the processing circuitry is configured to determine coordinates of the wireless device on a map of the site.
13. The network management system of clause 11 or clause 12, wherein to determine the location of the wireless device in the site based on the signal strength measurements, the processing circuitry is configured to generate one or more location probability surfaces indicative of a probability that the wireless device is located in one or more geographic areas of the site based on signal strength measurements of the one or more directional beams of the first set of directional beams transmitted at the first offset angle and signal strength measurements of the one or more directional beams of the second set of directional beams transmitted at the second offset angle.
14. The network management system of any of clauses 11 to 13, wherein the second set of directional beams transmitted at the second offset angle are transmitted at a 22.5 degree offset from the first set of directional beams transmitted at the first offset angle.
15. The network management system of any of clauses 11 to 14,
   wherein the first set of directional beams comprise a first set of eight directional beams transmitted at the first offset angle and the second set of directional beams comprise a second set of eight directional beams transmitted at the second offset angle.
16. The network management system of clause 15,
   wherein the first set of eight directional beams transmitted at the first offset angle are transmitted at a 45 degree interval, and
   wherein the second set of eight directional beams transmitted at the second offset angle are transmitted at a 22.5 degree offset from the first set of eight directional beams.
17. A user equipment device comprising:
   memory; and
   processing circuitry coupled to the memory, the processing circuitry configured to:
      receive, from a network device, a plurality of directional beams, wherein the plurality of directional beams comprises a first directional beam of a first set of directional beams transmitted by the network device at a first offset angle and a second directional beam of a second set of directional beams transmitted by the network device at a second offset angle;
      send, to a network management system, a signal strength measurement for the first directional beam and a signal strength measurement for the second directional beam; and
      based on sending the signal strength measurement for the first directional beam and the signal strength measurement for the second directional beam, receive, from the network management system, location information indicative of a location of the user equipment device in a site.
18. The user equipment device of clause 17, wherein the location information comprises coordinates of the user equipment device on a map of the site.
19. The user equipment device of clause 17 or clause 18, wherein the second set of directional beams transmitted at the second offset angle is offset from the first set of directional beams transmitted at the first offset angle.
20. The user equipment device of any of clauses 17 to 19, wherein the second set of directional beams transmitted at the second offset angle is transmitted with a 22.5 degree offset from the first set of directional beams transmitted at the first offset angle.

## Claims

1. A network device comprising:
a plurality of directional antennas configured to transmit a plurality of directional beams, wherein each directional beam of the plurality of directional beams is offset by one of a plurality of offset angles, wherein at least one directional beam of the plurality of directional beams is formed by one or more signals with a phase shift; and
processing circuitry configured to send, to a network management system, information associated with one or more directional beams of the plurality of directional beams that are received by a wireless device to determine a location of the wireless device in a site.

2. The network device of claim 1, wherein the plurality of directional beams comprises:
a first set of directional beams transmitted at a first offset angle; and
a second set of directional beams transmitted at a second offset angle.

3. The network device of claim 2, wherein the second set of directional beams are offset from the first set of directional beams transmitted at the first offset angle.

4. The network device of claim 2, wherein the second set of directional beams transmitted at the second offset angle are offset from the first set of directional beams by 22.5 degrees.

5. The network device of any of claims 1-4,
wherein the plurality of directional antennas comprises eight directional antennas, and
wherein the plurality of directional beams comprises sixteen directional beams, wherein the sixteen directional beams comprise a first set of eight directional beams transmitted at a first offset angle and a second set of eight directional beams transmitted at a second offset angle.

6. The network device of claim 5,
wherein the first set of eight directional beams transmitted at the first offset angle are transmitted at a 45 degree interval, and
wherein the second set of eight directional beams transmitted at the second offset angle are transmitted at a 22.5 degree offset from the first set of eight directional beams.

7. The network device of any of claims 1-6, wherein the at least one directional beam is formed by a first signal that has the phase shift and a second signal that does not have the phase shift.

8. The network device of any of claims 1-7, further comprising:
control circuitry configured to control propagation of the one or more signals to the plurality of directional antennas; and
phase shift circuitry configured to apply the phase shift to the one or more signals.

9. The network device of any of claims 1-8, wherein the phase shift comprises at least one of a positive phase shift or a negative phase shift.

10. The network device of any of claims 1-9, wherein the information associated with the one or more directional beams of the plurality of directional beams that are received by the wireless device comprise signal strength measurements of the one or more directional beams of the plurality of directional beams that are received by the wireless device.

11. A method comprising:
transmitting, by a plurality of directional antennas of a network device, a plurality of directional beams, wherein each directional beam of the plurality of directional beams is offset by one of a plurality of offset angles, wherein at least one directional beam of the plurality of directional beams is formed by one or more signals with a phase shift; and
sending, by the network device and to a network management system, information associated with one or more directional beams of the plurality of directional beams that are received by a wireless device to determine a location of the wireless device in a site.

12. The method of claim 11, further comprising steps corresponding to the functionality recited in any of claims 2-10.

13. Computer-readable storage media encoded with instructions for causing one or more programmable processors to become configured to perform the method recited by any of claims 11-12.
